# EUROPEAN PATENT SPECIFICATION

(11) **EP 1 140 470 B1**
(45) Date of publication and mention of the grant of the patent: **23.07.2003**
(21) Application number: 99963637.6
(22) Date of filing: 30.12.1999
(51) Int. Cl.: B29C 55/12, B29C 51/26

(54) **PLASTIC STRETCHING METHOD AND APPARATUS FOR USE IN VACUUM FORMING TECHNIQUES**
KUNSTSTOFFSTRECKVERFAHREN UND -VORRICHTUNG ZUR VERWENDUNG IM VAKUUMFORMEN
PROCEDE D'ETIREMENT DE MATIERE PLASTIQUE ET APPAREIL CORRESPONDANT A UTILISER DANS LE CADRE DE TECHNIQUES DE FORMAGE SOUS VIDE

(30) Priority: 31.12.1998 GB 9828820; 28.10.1999 GB 9925486
(43) Date of publication of application: 10.10.2001
(73) Proprietor: Preston Associates (Europe) LDA, Matoshinos (PT)
(72) Inventor: PRESTON, John, Meek, Kincardine on Forth FK10 4NH (GB); HALL, Gordon, Kincardine on Forth FK10 4NH (GB)
(74) Representative: McKechnie, Neil
(86) International application number: GB9904391
(87) International publication number: WO00040392

(56) References cited:
- EP-A- 0 623 449
- US-A- 3 579 718
- US-A- 3 635 640
- DATABASE WPI Section Ch, Week 198033 Derwent Publications Ltd., London, GB; Class A32, AN 1980-58326C XP002135276 -& SU 706 249 A (SUBBOTIN A N), 30 December 1979 (1979-12-30)
- PATENT ABSTRACTS OF JAPAN vol. 012, no. 475 (M-774), 13 December 1988 (1988-12-13) -& JP 63 197626 A (SINTOKOGIO LTD), 16 August 1988 (1988-08-16)
- PATENT ABSTRACTS OF JAPAN vol. 009, no. 183 (M-400), 30 July 1985 (1985-07-30) -& JP 60 049921 A (TOYOTA JIDOSHA KK), 19 March 1985 (1985-03-19)

## Description

The present invention relates in general to technology for stretching plastic sheets. In particular, the invention relates to the stretching of plastic sheets as a preparation step for use with vacuum forming techniques.

Vacuum forming techniques are used in a variety of industries; for example, bathroom furnishings such as baths can be vacuum formed from a single sheet of thermoplastic material. The thermoplastic material most commonly used for vacuum forming bathroom furnishings at the present time is acrylic.

In this manufacturing process, the cost of the thermoplastic sheet represents approximately 70% of the manufacturer's final costs. It would therefore be beneficial to find a method of using less thermoplastic in the manufacturing process. However, if one simply used a thinner sheet, one would expect to produce a final product with reduced mechanical strength.

It is therefore an aim of the present invention to provide a method and apparatus for producing vacuum formed goods that uses less thermoplastic than conventional techniques whilst retaining, or even improving, mechanical strength.

We have found that a thermoplastic sheet, such as an acrylic sheet, which has been stretched before vacuum forming provides a final product which has greater mechanical strength than an unstretched sheet which has the same thickness at the start of the vacuum forming step.

However, when one considers how to implement this stretching step industrially, a technical difficulty becomes apparent. When a plastic sheet is stretched it will scallop, that is to say that it will narrow in the middle with the sides bowing inwards. This means that it will not have a constant width and thickness throughout and cannot be cut efficiently into smaller square or rectangular portions.

For example, US Patent No. 5,271,352 to Critical Sciences (Australia) Limited discloses a plastic stretching device for use in vacuum forming boat hulls. This device pulls plastic apart without any means for preventing scalloping. It is therefore impractical to use for any significant amount of stretching.

PCT/US92/07408 describes a plastic stretching device which has movable clamping means holding all sides of a plastic sheet. However, the edges of the plastic sheet would be unable to expand with the material as a whole, distorting its shape.

JP60049921 to Toyota Jidosha KK goes part of the way to solving this problem by having a plurality of clamps along at least one side of a plastic sheet. However, the movement of each clamps needs individually controlled, leading to a complex and expensive machine.

US3579718 describes an apparatus for stretching sheets of material where there are elongate clamping means which comprise a plurality of movable clamping means. However, although this allows movement of the clamps during stretching, there is no facility to then hold the stretched sheet in place to allow subsequent vacuum forming.

Similarly, US3635640 describes arrangements and methods where the apparatus of US3579718 may be used.

In JP63197626 to Shinto Kogyo KK, a plurality of clamps along opposite sides of a sheet of plastic are controlled automatically by their being mounted on endless roller chains which function to move the sheet of plastic into and out of a heating means as well as holding the plastic sheet. However, when material is stretched by this machine moving the two roller chains apart, the material edges held by the chains are unable to contract proportionately, leading to distortion of the edges and scalloping of the sheet as a whole.

The aim of this invention is therefore to provide a machine for and a method of stretching plastic sheets which can be used to expand the total surface area of the sheet without distorting the sheet, wasting material or having a nonuniform thickness. In particular, the invention aims to provide a simple controllable mechanism. Furthermore, this invention aims to stretch the plastic sheet in a manner adapted for immediate use in vacuum forming to gain the strength enhancing benefits of the stretching step.

In this application, the term "plastic" refers to any thermoplastic material.

According to a first aspect of the present invention there is provided a machine for stretching a rectangular sheet of plastic material as defined in claim 1.

According to a second aspect of the present invention, there is provided a method of stretching a rectangular sheet of plastic material as defined in the independent claim 8.

An example embodiment of the present invention will now be illustrated with reference to the following figures in which:
Figure 1 is a plan view of a plastic sheet stretching machine;
Figure 2 is a cross-section through a plastic stretching machine along line AA;
Figure 3 is a perspective view of a plastic stretching machine according to the present invention;
Figure 4 is a table of results from a Notched Charpy Impact Strength test performed to BS EN ISO 179/1eA-1997; and
Figure 5 shows a plan for cutting up sheets of material in a conventional fashion and in a fashion for use with the present invention.

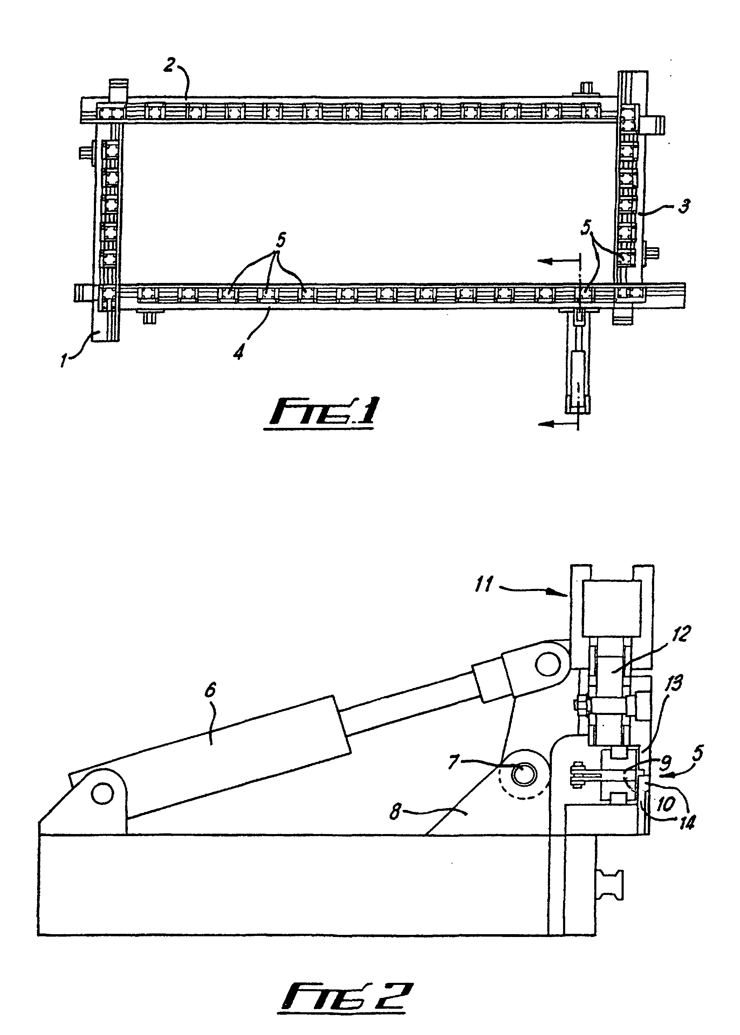

A plastic stretching machine shown in plan view in Figure 1 is intended for use with a rectangular sheet of plastic material or any other vacuum formable material. Elongate clamping means are provided in the form of four clamping bars (1 to 4), one to clamp each edge of the rectangular plastic sheet. Clamping bars 1 and 3 oppose each other, as do clamping bars 2 and 4. Clamping bars 1 and 2 are fixed in place, whereas clamping bars 3 and 4 may be moved, as controlled by a programmable logic controller.

Each clamping bar 1, 2, 3 and 4 comprises a plurality of secondary clamping means 5 (only some of which are labelled in Figure 1). These clamping means are mounted upon each clamp bar and may move along its length with a low co-efficient of friction.

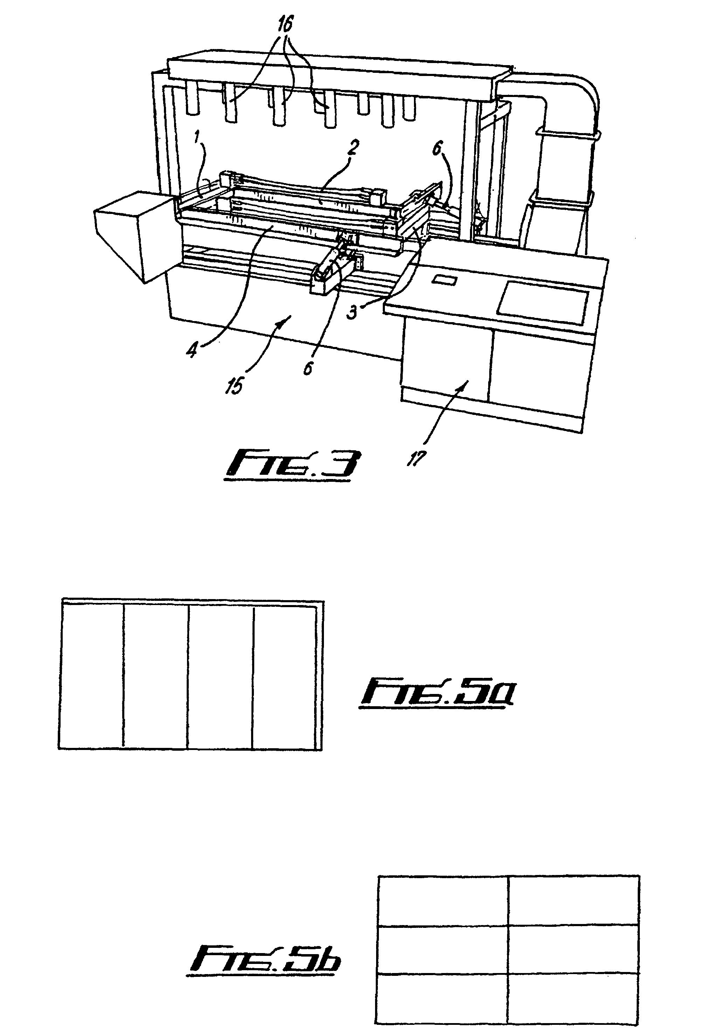

A rectangular hot thermoplastic sheet is placed within the device and is clamped around its four edges by the secondary clamps 5. This apparatus is shown in cross-section along line AA in Figure 2. The machine may also have means to itself heat the sheet and/or keep the sheet hot.

Actuator 6 (one shown in detail as an example) activates the clamping mechanism. This causes the clamping head to be rotated around joint 7 on support assembly 8 and the plastic sheet is held in the secondary clamps 5 between plates 9 and 10. Alternate pairs of clamp bars are then pulled apart. For example, whilst clamp bar 1 is held in place, clamp bar 3 may be moved away from it, stretching the plastic sheet in the longitudinal direction. Clamp bars 2 and 4 do not move. However, the secondary clamps 5 are free to move along the clamp bars. They are pulled along by the material sheet and therefore move proportionately to the movement of clamp bar 3. They act to resist scalloping of the plastic sheet.

Similarly, clamp bar 4 can be moved away from clamp bar 2, whilst clamp bar 1 and clamp bar 3 remain in place. Again, the clamping means move proportionately to the stretching of the sheet cause by movement in clamping bar 4 and prevent scalloping. In order for this to work there has to be very low friction preventing the movement of the secondary clamping means.

Once the stretching phase has been completed, an actuator 11 acting through a thrust pin 12 engages a primary clamping means which is provided on each clamped set and comprises a top plate 13 and bottom plate 14 within which the plastic sheet is securely held. All four sides are held at once.

A mould is then driven up through the clamped sheet forming a seal. The mould is then vacuumed by conventional means to form the resulting mould. At the end of this complete product cycle the secondary clamp carriages 5 are returned to their initial positions by the action of the primary clamp bars. A series of linkages prevent the secondary clamps 5 from getting too close to each other.

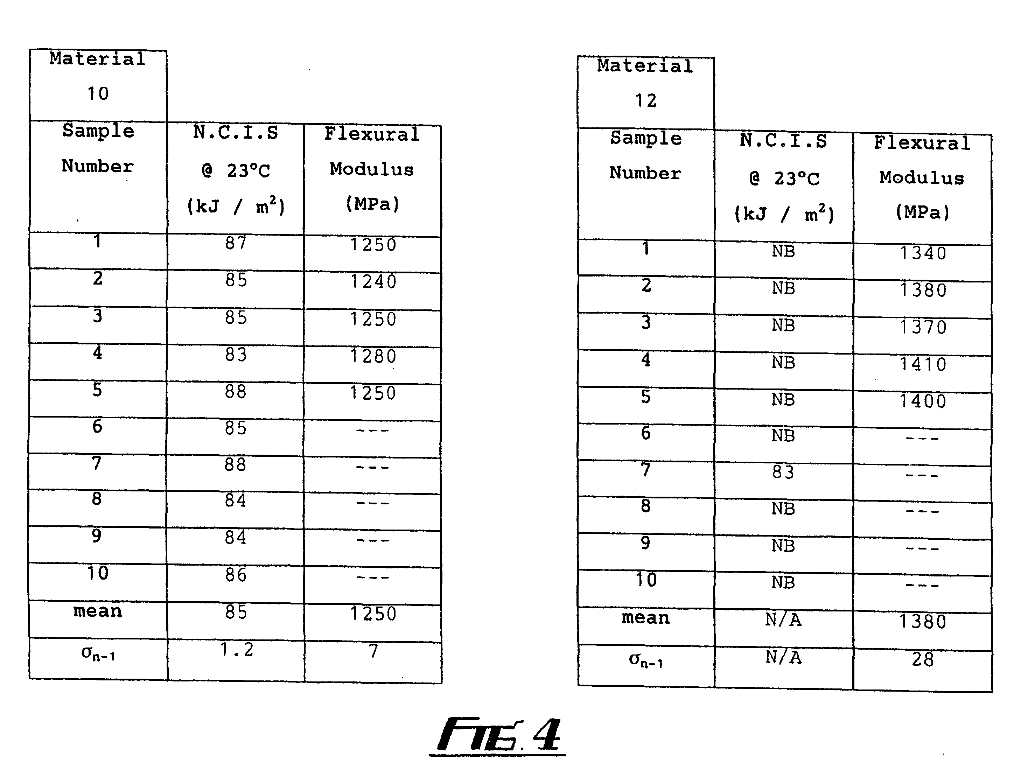

Figure 4 shows a perspective view of the combined stretching and vacuum forming machine. In this Figure, conventional vacuum forming apparatus 15 is provided underneath the stretching apparatus. The machine also provides zoned cooling for control of thickness distribution in the final product. This is a technique used in the prior art and cooling apparatus 16 is mounted above the stretching apparatus. An electronic controller 17 is provided to allow automation of the procedure.

The entire process cycle involving both the timings and movements is controlled by a computer or controlled programme logic controller. As a result of this machine it becomes possible to make considerable savings in raw material costs; for example, experiments have indicated that savings of 30% - 50% can be readily achieved. This could not be achieved simply by vacuum forming a thinner sheet of thermoplastic as only the strength benefits provided by the stretching step allow this lower volume of plastic to be used.

Figure 4 shows a table of results from a Notched Charpy Impact Strength (N.C.I.S.) test performed to BS EN ISO 179/1eA - 1997 on samples of 5mm Acrylate Capped ABS taken through the above process.

In this table, Flexural Modulus tests were performed to BS EN ISO 178 - 1997 at a test speed of 2mm/min. Sample 10 test bars were nominally 4mm thick x 10mm wide.
Sample 12 test bars nominally 2.3mm thick x 15mm wide. Fallen Ball. All Notched Charpy samples that gave a valid result exhibited a partial break type.

Figure 5 (a) shows a conventional method for cutting up a sheet of plastic that is 3100mm x 1800mm to form four rectangular pieces 1750mm x 750mm for use in making a product sized 1700mm x 700mm. Note that offcuts are left around the edge. Figure 5 (b) shows how this same sheet can be cut into six rectangular pieces 1550mm x 600mm without offcuts, that may be stretched then used to give a product sized 1700mm x 700mm as before.

This reduces the time required and the space requirements for storing raw material. Additionally, fewer different sizes of sheet will have to be stocked by a manufacturer. These benefits represent a substantial cut in the cost of manufacturing the product, therefore providing an important commercial advantage.

It will be clear to one skilled in the art that this technique can be used with acrylic plastic or any other vacuum formable material.

Further modifications and improvements may be incorporated without departing from the scope of the invention as defined in the appended claims.

## Claims

1. A machine for stretching and vacuum forming a rectangular sheet of plastic material, the machine having a first and second orthogonal pairs of opposed elongate clamping means (1-4) which engagably co-operate with the sides of said sheet and thereby hold said sheet, wherein the elongate clamping means (1-4) comprise primary clamping means (13,14) and secondary (5) clamping means, with the primary clamping means (13,14) engageably and fixedly clamping a side of the sheet of the plastic material and the secondary clamping means (5) engageably clamping a portion of the edge of the rectangular sheet of plastic and being adapted to move along the length of the elongate clamping means (1-4), the machine including a means to controllably urge apart a first pair of opposed elongate clamping means (1 and 3) and thereby stretch a sheet held therebetween, whereby the second pair of opposed elongate clamping means (2 and 4) uses the movable secondary clamping means (5) to allow said sheet to stretch uniformly in a direction parallel to the lengths of the second pair of elongate clamping means (2 and 4) whilst resisting movement of the clamped sides of the sheet in a direction orthogonal to the lengths of the second pair of elongate clamping means (2 and 4), and once the plastic sheet has been stretched the fixed primary clamping means (13,14) are then used to hold the plastic sheet in a fixed position during the vacuum forming process.

2. A machine for stretching and vacuum forming a rectangular sheet of plastic material as Claimed in Claim 1, the machine including means to controllably urge apart both pairs of opposed elongate clamping means (1-4) and thereby stretch a sheet held therein in two dimensions, each elongate clamping means (1-4) using the secondary clamping means (5) to allow said sheet to stretch uniformly in a direction parallel to the length of said individual elongate clamping means (1-4) whilst resisting movement of the side of the rectangular sheet clamped by said individual elongate clamping means (1-4) in a direction orthogonal to the length of said individual elongate clamping means(1-4).

3. A machine for stretching and vacuum forming a rectangular sheet of plastic material as Claimed in Claim 1 or Claim 2, the machine being adapted to stretch the sheet first in one direction and then subsequently in a second direction orthogonal to the first direction.

4. A machine for stretching and vacuum forming a rectangular sheet of plastic as claimed in any of the previous Claims, wherein the secondary clamps are moved along the length of the elongate clamping means by the motion of the sheet.

5. A machine for stretching and vacuum forming a rectangular sheet of plastic as claimed in any preceding Claim, the machine having a heating means for evenly heating a plastic sheet held therein.

6. A machine for stretching and vacuum forming a rectangular sheet of plastic as claimed in any preceding Claim, wherein the vacuum forming means is engagable and adapted to vacuum form a rectangular sheet of plastic stretched by the machine for stretching a rectangular sheet of plastic whilst said rectangular sheet of plastic is still held within the elongate clamping means (1-4) of the machine by the primary fixed clamping means (13,14).

7. A machine for stretching and vacuum forming a rectangular sheet of plastic as claimed in any preceding Claim, the machine having a means for selectively cooling zones of the plastic sheet held therein.

8. A method of stretching and vacuum forming a rectangular sheet of plastic material, the method comprising the steps of:
(a) engagably holding the sides of said sheet using movable clamping means (5); and
(b)(i) stretching said sheet along a first axis of said sheet whilst holding the sides of said sheet parallel to the first axis so as to allow the sheet to stretch proportionately along the first axis but so as to resist deformation of the sides of said sheet orthogonal to the first axis; and
(c) fixedly holding the sides of said stretched sheet using fixed clamping means (13,14); and
(d) vacuum forming said streched sheet.

9. A method of stretching and vacuum forming a rectangular sheet of plastic material as claimed in Claim 8, the method further having the step of:
(b)(ii) stretching said sheet along a second axis of said sheet whilst holding the sides of said sheet parallel to the second axis so as to allow the sheet to stretch proportionately along the second axis but so as to resist deformation of the sides of said sheet orthogonal to the second axis, the second axis being orthogonal to the first axis.

10. A method of stretching and vacuum forming a rectangular sheet of plastic material as claimed in Claim 8, the method involving, simultaneous to stretching said sheet parallel to a first axis, also stretching said sheet along a second axis of said sheet whilst holding the sides of said sheet parallel to the second axis so as to allow the sheet to stretch proportionately along the second axis but so as to resist deformation of the sides of said sheet orthogonal to the second axis, the second axis being orthogonal to the first axis.

11. A method of stretching and vacuum forming a rectangular sheet of plastic material as claimed in Claim 8 wherein the secondary clamps are adapted to move along the length of the elongate clamping means (1-4) proportionately to the stretching of the sheet along an axis parallel to the clamping means.

12. A method of stretching and vacuum forming a rectangular sheet of plastic material as claimed in Claim 11 wherein the secondary clamps are moved along the length of the elongate clamping (1-4) means by the motion of the sheet.

13. A method of stretching and vacuum forming a rectangular sheet of plastic material as claimed in any of Claims 8 to 12, the method having the step of heating the sheet of plastic material.

14. A method of stretching and vacuum forming a rectangular sheet of plastic material as claimed in Claim 8 or Claim 13 wherein zones of the plastic material are selectively cooled.

## Patentansprüche

1. Maschine zum Strecken und Vakuumformen einer rechteckigen Tafel aus Plastikmaterial, wobei die Maschine ein erstes und ein zweites orthogonales Paar einander entgegengesetzter länglicher Klemmvorrichtungen (1 - 4) hat, die angreifbar mit den Seiten der genannten Tafel zusammenwirken und dadurch die genannte Tafel halten, wobei die länglichen Klemmvorrichtungen (1 - 4) primäre Klemmvorrichtungen (13, 14) und sekundäre (5) Klemmvorrichtungen umfassen, wobei die primären Klemmvorrichtungen (13, 14) eine Seite der Tafel des Plastikmaterials angreifbar und fixiert einklemmen und die sekundären Klemmvorrichtungen (5) einen Teil des Randes der rechteckigen Plastiktafel angreifbar einklemmen und ausgeführt sind, um sich entlang der Länge der länglichen Klemmvorrichtungen (1 - 4) zu bewegen, wobei die Maschine eine Vorrichtung zum kontrollierbaren Auseinanderzwingen eines ersten Paares entgegengesetzter länglicher Klemmvorrichtungen (1 und 3) und dadurch zum Strecken einer dazwischen gehaltenen Tafel hat, wodurch das zweite Paar entgegengesetzter länglicher Klemmvorrichtungen (2 und 4) die beweglichen sekundären Klemmvorrichtungen (5) benutzt, um die genannte Tafel sich in einer zu den Längen des zweiten Paares länglicher Klemmvorrichtungen (2 und 4) parallelen Richtung einheitlich strecken zu lassen, während es einer Bewegung der eingeklemmten Seiten der Tafel in einer zu den Längen des zweiten Paares länglicher Klemmvorrichtungen (2 und 4) orthogonalen Richtung widersteht, und wenn die Plastiktafel gestreckt worden ist, werden die fixierten primären Klemmvorrichtungen (13, 14) dann zum Festhalten der Plastiktafel in einer festen Position während des Vakuumformvorgangs verwendet.

2. Maschine zum Strecken und Vakuumformen einer rechteckigen Tafel aus Plastikmaterial nach Anspruch 1, wobei die Maschine Vorrichtungen zum kontrollierbaren Auseinanderzwingen beider Paare entgegengesetzter länglicher Klemmvorrichtungen (1 - 4) und dadurch zum Strecken einer darin festgehaltenen Tafel in zwei Dimensionen hat, wobei jede längliche Klemmvorrichtung (1 - 4) die sekundären Klemmvorrichtungen (5) benutzt, um die genannte Tafel sich in einer zu der Länge der genannten einzelnen länglichen Klemmvorrichtungen (1 - 4) parallelen Richtung einheitlich strecken zu lassen, während sie einer Bewegung der von den genannten einzelnen länglichen Klemmvorrichtungen (1 - 4) eingeklemmten Seite der rechteckigen Tafel in einer zu der Länge der genannten einzelnen länglichen Klemmvorrichtungen (1 - 4) orthogonalen Richtung widersteht.

3. Maschine zum Strecken und Vakuumformen einer rechteckigen Tafel aus Plastikmaterial nach Anspruch 1 oder Anspruch 2, wobei die Maschine die Aufgabe hat, die Tafel zunächst in eine Richtung und dann anschließend in eine zweite, zu der ersten Richtung orthogonale Richtung zu strecken.

4. Maschine zum Strecken und Vakuumformen einer rechteckigen Plastiktafel nach einem der vorhergehenden Ansprüche, bei der die sekundären Klemmen von der Bewegung der Tafel entlang der Länge der länglichen Klemmvorrichtungen bewegt werden.

5. Maschine zum Strecken und Vakuumformen einer rechteckigen Plastiktafel nach einem der vorhergehenden Ansprüche, wobei die Maschine eine Heizvorrichtung zum gleichmäßigen Erwärmen einer darin gehaltenen Plastiktafel hat.

6. Maschine zum Strecken und Vakuumformen einer rechteckigen Plastiktafel nach einem der vorhergehenden Ansprüche, bei der die Vakuumformvorrichtung angreifbar und ausgeführt ist, um eine von der Maschine zum Strecken einer viereckigen Plastiktafel gestreckte rechteckige Plastiktafel unter Vakuum zu formen, während die genannte rechteckige Plastiktafel noch von den primären fixierten Klemmvorrichtungen (13, 14) in den länglichen Klemmvorrichtungen (1 - 4) der Maschine gehalten wird.

7. Maschine zum Strecken und Vakuumformen einer rechteckigen Plastiktafel nach einem der vorhergehenden Ansprüche, wobei die Maschine eine Vorrichtung zum selektiven Kühlen von Zonen der darin gehaltenen Plastiktafel hat.

8. Verfahren zum Strecken und Vakuumformen einer rechteckigen Tafel aus Plastikmaterial, wobei das Verfahren die folgenden Schritte umfasst:
(a) angreifbares Halten der Seiten der genannten Tafel mit Hilfe beweglicher Klemmvorrichtungen (5) und
(b) (i) Strecken der genannten Tafel entlang einer ersten Achse der genannten Tafel, während die Seiten der genannten Tafel parallel zu der ersten Achse gehalten werden, um die Tafel sich entlang der ersten Achse proportional strecken zu lassen, aber um einer zu der ersten Achse orthogonalen Verformung der Seiten der genannten Tafel zu widerstehen, und
(c) Festhalten der Seiten der genannten gestreckten Tafel mit Hilfe von fixierten Klemmvorrichtungen (13, 14) und
(d) Vakuumformen der genannten gestreckten Tafel.

9. Verfahren zum Strecken und Vakuumformen einer rechteckigen Tafel aus Plastikmaterial nach Anspruch 8, wobei das Verfahren ferner den folgenden Schritt aufweist:
(b) (ii) Strecken der genannten Tafel entlang einer zweiten Achse der genannten Tafel, während die Seiten der genannten Tafel parallel zu der zweiten Achse gehalten werden, um die Tafel sich proportional entlang der zweiten Achse strecken zu lassen, aber um einer Verformung der Seiten der genannten Tafel orthogonal zu der zweiten Achse zu widerstehen, wobei die zweite Achse zu der ersten Achse orthogonal ist.

10. Verfahren zum Strecken und Vakuumformen einer rechteckigen Tafel aus Plastikmaterial nach Anspruch 8, wobei das Verfahren gleichzeitig zum Strecken der genannten Platte parallel zu einer ersten Achse auch das Strecken der genannten Tafel entlang einer zweiten Achse der genannten Tafel beinhaltet, wobei die Seiten der genannten Tafel parallel zu der zweiten Achse gehalten werden, um die Tafel sich entlang der zweiten Achse proportional strecken zu lassen, aber um einer Verformung der Seiten der genannten Tafel orthogonal zu der zweiten Achse zu widerstehen, wobei die zweite Achse zu der ersten Achse orthogonal ist.

11. Verfahren zum Strecken und Vakuumformen einer rechteckigen Tafel aus Plastikmaterial nach Anspruch 8, bei dem die sekundären Klemmen ausgeführt sind, um sich entlang der Länge der länglichen Klemmvorrichtungen (1 - 4) proportional zum Strecken der Tafel entlang einer zu den Klemmvorrichtungen parallelen Achse zu bewegen.

12. Verfahren zum Strecken und Vakuumformen einer rechteckigen Tafel aus Plastikmaterial nach Anspruch 11, bei dem die sekundären Klemmen von der Bewegung der Tafel entlang der Länge der länglichen Klemmvorrichtungen (1 - 4) bewegt werden.

13. Verfahren zum Strecken und Vakuumformen einer rechteckigen Tafel aus Plastikmaterial nach einem der Ansprüche 8 bis 12, wobei das Verfahren den Schritt des Erwärmens der Tafel aus Plastikmaterial hat.

14. Verfahren zum Strecken und Vakuumformen einer rechteckigen Tafel aus Plastikmaterial nach Anspruch 8 oder Anspruch 13, bei dem Zonen des Plastikmaterials selektiv gekühlt werden.

## Revendications

1. Machine pour étirer et former sous vide une feuille de plastique rectangulaire, la machine comportant une première et une deuxième paires orthogonales de moyens de serrage allongés opposés (1-4) qui coopèrent par mise en prise avec les côtés de ladite feuille et la maintiennent de cette façon, dans laquelle les moyens de serrage allongés (1-4) comprennent des moyens de serrage primaires (13,14) et un moyen de serrage secondaire (5), les moyens de serrage primaires (13,14) serrant par mise en prise et de manière fixe un côté de la feuille plastique et le moyen de serrage secondaire (5) serrant par mise en prise une partie du bord de la feuille de plastique rectangulaire et étant propre à se déplacer sur la longueur des moyens de serrage allongés (1-4), la machine comprenant un moyen pour pousser de manière commandée dans des directions opposées une première paire de moyens de serrage allongés opposés (1 et 3) et, de ce fait, étirer une feuille maintenue entre ceux-ci, de telle sorte que la deuxième paire de moyens de serrage allongés opposés (2 et 4) utilise le moyen de serrage secondaire mobile (5) pour permettre à ladite feuille de s'étirer uniformément dans une direction parallèle aux longueurs de la deuxième paire de moyens de serrage allongés (2 et 4) tout en résistant au déplacement des côtés serrés de la feuille dans une direction orthogonale aux longueurs de la deuxième paire de moyens de serrage allongés (2 et 4), et une fois la feuille de plastique étirée, les moyens de serrage primaires fixes (13,14) sont ensuite utilisés pour maintenir la feuille de plastique dans une position fixe pendant le processus de formage sous vide.

2. Machine pour étirer et former sous vide une feuille de plastique rectangulaire suivant la revendication 1, la machine comprenant un moyen pour pousser de manière commandée dans des directions opposées les deux paires de moyens de serrage allongés opposés (1-4) et, de ce fait, étirer une feuille maintenue dans ceux-ci dans deux dimensions, chaque moyen de serrage allongé (1-4) utilisant le moyen de serrage secondaire (5) pour permettre à ladite feuille de s'étirer uniformément dans une direction parallèle à la longueur dudit moyen de serrage allongé individuel (1-4) tout en résistant au déplacement du côté de la feuille rectangulaire serrée par ledit moyen de serrage allongé individuel (1-4) dans une direction orthogonale à la longueur dudit moyen de serrage allongé individuel (1-4).

3. Machine pour étirer et former sous vide une feuille de plastique rectangulaire suivant la revendication 1 ou 2, la machine étant propre à étirer la feuille d'abord dans une direction, puis ensuite dans une deuxième direction orthogonale à la première direction.

4. Machine pour étirer et former sous vide une feuille de plastique rectangulaire suivant l'une quelconque des revendications précédentes, dans laquelle les pièces de serrage secondaires sont déplacées sur la longueur des moyens de serrage allongés par le mouvement de la feuille.

5. Machine pour étirer et former sous vide une feuille de plastique rectangulaire suivant l'une quelconque des revendications précédentes, la machine comportant un moyen de chauffage pour chauffer uniment une feuille de plastique maintenue dans celui-ci.

6. Machine pour étirer et former sous vide une feuille de plastique rectangulaire suivant l'une quelconque des revendications précédentes, dans laquelle le moyen de formage sous vide peut mettre en prise et est propre à former sous vide une feuille de plastique rectangulaire étirée par la machine pour étirer une feuille de plastique rectangulaire, tandis que ladite feuille est encore maintenue dans les moyens de serrage allongés (1-4) de la machine par les moyens de serrage fixes primaires (13, 14).

7. Machine pour étirer et former sous vide une feuille de plastique rectangulaire suivant l'une quelconque des revendications précédentes, la machine comportant un moyen pour refroidir de manière sélective des zones de la feuille de plastique maintenue dans celui-ci.

8. Procédé d'étirage et de formage sous vide d'une feuille de plastique rectangulaire, le procédé comprenant les étapes suivantes :
(a) maintenir par mise en prise les côtés de ladite feuille en utilisant un moyen de serrage mobile (5), et
(b) (i) étirer ladite feuille suivant un premier axe de ladite feuille tout en maintenant les côtés de ladite feuille parallèles au premier axe de manière à permettre à la feuille de s'étirer proportionnellement suivant le premier axe mais de manière à résister à la déformation des côtés de ladite feuille de manière orthogonale par rapport au premier axe, et
(c) maintenir de manière fixe les côtés de ladite feuille étirée en utilisant les moyens de serrage fixes (13,14), et
(d) former sous vide ladite feuille étirée.

9. Procédé d'étirage et de formage sous vide d'une feuille de plastique rectangulaire suivant la revendication 8, le procédé comprenant en outre l'étape suivante :
(b) (ii) étirer ladite feuille suivant un deuxième axe de ladite feuille tout en maintenant les côtés de ladite feuille parallèles au deuxième axe de manière à permettre à la feuille de s'étirer proportionnellement suivant le deuxième axe mais de manière à résister à la déformation des côtés de ladite feuille de manière orthogonale par rapport au deuxième axe, le deuxième axe étant orthogonal au premier axe.

10. Procédé d'étirage et de formage sous vide d'une feuille de plastique rectangulaire suivant la revendication 8, le procédé faisant intervenir, simultanément à l'étirage de ladite feuille, parallèlement à un premier axe, également l'étirage de ladite feuille suivant un deuxième axe de ladite feuille tout en maintenant les côtés de ladite feuille parallèles au deuxième axe de manière à permettre à la feuille de s'étirer proportionnellement suivant le deuxième axe mais de manière à résister à la déformation des côtés de ladite feuille orthogonalement par rapport au deuxième axe, le deuxième axe étant orthogonal au premier axe.

11. Procédé d'étirage et de formage sous vide d'une feuille de plastique rectangulaire suivant la revendication 8, dans lequel les pièces de serrage secondaires sont propres à se déplacer sur la longueur des moyens de serrage allongés (1-4) proportionnellement à l'étirage de la feuille suivant un axe parallèle aux moyens de serrage.

12. Procédé d'étirage et de formage sous vide d'une feuille de plastique rectangulaire suivant la revendication 11, dans lequel les pièces de serrage secondaires sont déplacées sur la longueur des moyens de serrage allongés (1-4) par le mouvement de la feuille.

13. Procédé d'étirage et de formage sous vide d'une feuille de plastique rectangulaire suivant l'une quelconque des revendications 8 à 12, le procédé comprenant l'étape visant à chauffer la feuille de matière plastique.

14. Procédé d'étirage et de formage sous vide d'une feuille de plastique rectangulaire suivant la revendication 8 ou 13, dans lequel des zones du matériau plastique sont refroidies de manière sélective.
